# EUROPÄISCHE PATENTSCHRIFT

(11) **EP 3 480 180 B1**
(45) Veröffentlichungstag und Bekanntmachung des Hinweises auf die Patenterteilung: **24.04.2024**
(21) Anmeldenummer: 18203793.7
(22) Anmeldetag: 31.10.2018
(51) Int. Cl.: C04B 33/04, B28B 11/08, C04B 33/13, C04B 33/34, C04B 35/626, C04B 38/00, C04B 38/06

(54) **ROHSTOFFMISCHUNG ZUR HERSTELLUNG EINER STEINZEUGFLIESE**
RAW MATERIAL MIXTURE FOR PRODUCING A STONEWARE TILE
MÉLANGE DE MATIÈRES PREMIÈRES POUR LA FABRICATION D'UN CARREAU EN GRÈS CÉRAME

(30) Priorität: 06.11.2017 DE 202017106696 U
(43) Veröffentlichungstag der Anmeldung: 08.05.2019
(73) Patentinhaber: Fliesenmarkt Herberhold GmbH, 59557 Lippstadt (DE)
(72) Erfinder: GEUKING, Hans-Dieter, 59556 Lippstadt-Cappel (DE); DICKOPF, Michael, 56244 Maxsain (DE); LAHR, Johannes, 56237 Deesen (DE); OGBAZGHI, Tekie, 59557 Lippstadt (DE); THOMAS, Christian, 59494 Soest (DE)
(74) Vertreter: Schäperklaus, Jochen

(56) Entgegenhaltungen:
- EP-A2- 2 129 637
- WO-A1-2004/013066
- US-A- 1 966 069
- US-A- 3 651 184
- US-A1- 2002 149 128
- US-A1- 2009 280 313
- DONDI MICHELE ET AL: "Clays and bodies for ceramic tiles: Reappraisal and technological classification", APPLIED CLAY SCIENCE, ELSEVIER, AMSTERDAM, NL, Bd. 96, 18. Februar 2014 (2014-02-18), Seiten 91-109, XP028876075, ISSN: 0169-1317, DOI: 10.1016/J.CLAY.2014.01.013

## Beschreibung

Die vorliegende Erfindung betrifft eine Steinzeugfliese, insbesondere eine Steinzeugfliese, die als Fassadenplatte verwendet werden kann. Wärmegedämmte Fassadensysteme gewinnen in der Bautechnik mehr und mehr an Bedeutung. Einen besonderen Stellenwert innerhalb der Wärmedämmverbundsysteme nehmen die Fassaden ein, die mit keramischen Fassadenplatten gegen Umwelteinflüsse geschützt werden.

An keramischen Fassadenplatten werden folgende Anforderungen gestellt:
- hoher Widerstand gegen mechanische Belastung und Oberflächenverschleiß
- hohe Bruchfestigkeit
- Porenverteilung gemäß DIN 18515
- Porenvolumen gemäß DIN 18515
- Wasseraufnahme < 3 %
- Frostbeständigkeit gemäß EN 14411

Die Herstellung von keramischen Fassadenplatten umfasst einen aufwändigen und mehrstufigen Prozess der Aufbereitung, Zusammenstellung und Verarbeitung von Rohmassen, der Formgebung von Rohlingen sowie das Trocknen, den Brand und die Nachbearbeitung der keramischen Fassadenplatten. Einen Überblick über die Verfahrensschritte gibt Dondi Michele et al ist dem Fachartikel unter dem Titel "Clays and bodies for ceramic tiles: reappraisal and technological classification" beispielsweise in Abschnitt 3.2 "Keramikfliesen Herstellung" (DONDI MICHELE ET AL: "Clays and bodies for ceramic tiles: Reappraisal and technological classification", Applied clay sciense, Elsevier, Amsterdam, NL, Bd. 96, 18. Februar 2014, Seiten 91-109, XP028876075, ISSN: 0169-1317, DOI: 10.1016/J.CLAY.2014.01.013)

Hauptrohstoffe für keramischen Fassadenplatten sind Tone. Hinzu komme Feldspat, Kaolin, ggf. Schamotte, ggf. Farbmittel (Farbstoff und/oder Pigmente) und Wasser.

Die zur Anwendung kommenden verschiedenen Tone bestehen häufig aus zusammengestellten Tonmischungen, die in einer vorgebrochenen Form (Stückgröße max. 5 cm) angeliefert werden. In einem ersten Aufbereitungsschritt werden die Tone in einem Trockner von der Grubenfeuchte (ca. 10 bis 14% je nach Qualität und Witterung) auf ca. 5% Restfeuchte vorgetrocknet. Anschließend werden die tonigen Rohstoffe in einer Mühle bis zu einer Feinheit von < 100 µm und einer Feuchte von < 1% mahlgetrocknet. Die so aufbereiteten Tone werden dann in separaten Bevorratungssilos gelagert und einer definierten Maukzeit ausgesetzt, um eine gleichmäßige Feuchte der Tone herzustellen.

Nach der Maukzeit werden die Tone und die weiteren Rohstoffe wie Feldspate, Schamotte, Kaoline und/oder Farbmittel gemäß einer Rezeptur zunächst trocken gemischt und anschließend unter Zugabe von Wasser nass gemischt.

Die so hergestellte Rohmasse wird in einer Vakuumstrangpresse weiterverarbeitet.

Das Strangpressen, auch als Extrudieren bezeichnet, ist der eigentliche formgebende Arbeitsschritt bei der Herstellung von keramischen Fassadenplatten. Die Rohmasse wird in der Strangpresse über Schneckenwellen hochverdichtet und über ein Mundstück der Presse ausgepresst. Zusätzlich wird zur Vermeidung von Lunkern (Lufteinschlüssen) die Masse evakuiert. Das Mundstück bestimmt mit seiner Form Kontur, Höhe und Breite des entstehenden Endlos-Tonbandes. Über Schneidapparaturen werden die Rohlinge in der gewünschten Länge abgeteilt.

Die extrudierten Rohlinge enthalten ca. 15 % bis 17% Wasser, welches benötigt wurde, um die Rohmasserezeptur für das Extrudieren plastisch verformbar zu halten. Für die weiteren Prozessschritte wird das Wasser aus den Platten entfernt. Hierfür werden die Rohlinge über einen bestimmten Zeitraum in einen Durchlauftrockner eingebracht, in dem den Platten bei einer Temperatur von ca. 80 - 110°C das Rest-Prozesswasser bis zu einer verbleibenden Restfeuchte von < 1 % entzogen wird.

Im Verlaufe dieses Trocknungsprozesses schrumpfen die Rohlinge in allen Dimensionen um ca. 5 % bis 6 % ihres Ursprungsmaßes. Dies ist u.a. für die Dimensionierung der Strangpressform (Mundstück) zu berücksichtigen.

Rohmasserezeptur, zeitlicher Verlauf der Trocknertemperatur/-feuchte und Restwassergehalt sind, um Trockenrisse zu vermeiden, gemäß den engen entwicklungstechnischen Vorgaben für keramische Fassadenplatten unbedingt einzuhalten.

Haben die Rohlinge einen Restfeuchtegehalt von < 1 % erreicht, werden sie aus dem Trockner entladen und weiterverarbeitet. Für die weiteren Prozessschritte wird zwischen glasierten und unglasierten Platten unterschieden.

Unglasierte Platten bestehen ausschließlich aus der ursprünglichen, nun getrockneten Rohmasserezeptur, die ohne weitere Beschichtungen gebrannt wird. Die Oberflächenfarbe entspricht der natürlichen Scherbenfarbe.

Glasierte Fliesen werden nach dem Trocknen mit einem Farbauftrag versehen (glasiert) und mit einer widerstandsfähigen Deckglasur beschichtet. Die Glasur besteht aus feinstvermahlenen Glasurbestandteilen, welche im Brennvorgang im Ofen bei ca. 1200 Grad Celsius aufgeschmolzen werden und ihre Farbbrillianz entfalten.

Der Farbauftrag kann als Dekordruck (Steinstruktur, Holzstruktur o.ä.) oder unifarben (rot, schwarz, blau, weiß usw.) ausgeführt werden.

Nach dem Trocknen und ggf. Glasieren werden die Rohlinge zu Fliesen gebrannt.

Durch diese Verfahrensschritte können keramische Fassadenplatten aber auch andere Keramikerzeugnisse hergestellt werden.

Sind keramische Fassadenplatten an einem Gebäude angebracht, kann es - insbesondere bei hochwärmegedämmten Fassaden - dazu kommen, dass sich in der Fassade, unmittelbar hinter den Fassadenplatten, Feuchtigkeit sammelt. Dabei kann es sich zum Beispiel um Feuchtigkeit handeln, die aus dem Inneren des Gebäudes in die mit der Fassade versehene Wand eintritt. Diese Feuchtigkeit wandert von der Innenseite zur Außenseite der Wand des Gebäudes durch die Wand und sammelt sich, da sie durch die Fassadenplatten nicht hindurchdringen kann, hinter den Fassadenplatten. Kühlt die Fassade ab, kann die Feuchtigkeit in der Wand kondensieren. Friert die kondensierte Feuchtigkeit, kann es durch die Expansion des frierenden Wassers zu Frostabsprengungen kommen, das bedeutet, dass sich wenigstens einige der keramischen Fassadenplatten ganz oder teilweise von der Wand lösen oder zumindest beschädigt werden.

Feuchtigkeit kann sich aber nicht nur aufgrund von Kondensation hinter den Fassadenplatten sammeln. Es ist ebenso möglich, dass durch die Fugen Niederschlagswasser in das Klebebett der Fassadenplatten eindringt und bei Frost zu den Frostabsprengungen führt.

Keramische Fassadenplatten finden daher derzeit in frostgefährdeten Gegenden nur eingeschränkt Verwendung.

Der Erfindung liegt die Aufgabe zu Grunde, diese Einschränkung zu beseitigen.

Die Aufgabe wird erfindungsgemäß dadurch gelöst, dass die Rezeptur einer erfindungsgemäßen Fliese verschiedene Tonmischungen, Feldspate und Kaolin nach folgender Zusammensetzung (Massenanteil) enthält:

| | |
|---|---|
| Tonmischung "T2761" | 50 % |
| Tonmischung "T1571" | 7,73 % |
| Feldspat "HP-1" | 9,54 % |
| Feldspat "Silbergrube" | 12,27 % |
| Feldspat "FS-700" | 12,73 % |
| Kaolin "KDG" | 7,73 % |

1.100 kg einer nach dieser Rezeptur hergestellten Trockenmischung kann mit 188l Wasser nassgemischt werden, um die Rohmasse für eine erfindungsgemäße Fliese herzustellen.

Die Tonmischung T2761 enthält folgende Bestandteile (Massenanteil):

| | |
|---|---|
| SiO2 | 66 bis 73%, vzw. ca 69 bis 70% |
| TiO2 | 1,4 bis 1,9% |
| Al2O3 | 22 bis 25%, vzw. ca 23 bis 24% |
| Fe2O3 | 1 bis 2%, vzw. 1,4 bis 2% |
| CaO | 0,2 bis 03% |
| MgO | 0,3 bis 0,5% |
| K2O | 2,1 bis 3,0% |
| Na2O | 0,15 bis 0,3% |
| | |

Die Tonmischung T1571 enthält folgende Bestandteile (Massenanteil):

| | |
|---|---|
| SiO2 | 68 bis 75%, vzw. ca 71,5 bis 73% |
| TiO2 | 1,4 bis 1,9% |
| Al2O3 | 20 bis 24%, vzw. Ca 21,5 bis 23% |
| Fe2O3 | 1 bis 2%, vzw. 1,0 bis 1,2% |
| K2O | 2,1 bis 3,0% |
| Na2O | 0,01 bis 0,03% |
| | |

Der Feldspat HP-1 enthält folgende Bestandteile (Massenanteil):

| | |
|---|---|
| SiO2 | 71,63 bis 75,63% |
| Al2O3 | 13,05 bis 14,65% |
| Fe2O3 | 0,18 bis 0,24% |
| MgO | max. 0,08% |
| CaO | max. 0,15% |
| Na2O | 0,38 bis 0,46% |
| K2O | 9,96 bis 10,96% |
| TiO2 | max.0,1% |
| | |

Der Feldspat Silbergrube enthält folgende Bestandteile (Massenanteil):

| | |
|---|---|
| SiO2 | 73 bis 75 % |
| Al2O3 | 15 bis 16 % |
| Fe2O3 | 0,5 bis 0,55 % |
| TiO2 | max.0,1 % |
| CaO | max. 0,5% |
| MgO | max. 0,03% |
| K2O | 3,0 bis 4,0% |
| Na2O | 4 bis 5% |
| | |

Der Feldspat FS-700 enthält folgende Bestandteile (Massenanteil):

| | |
|---|---|
| SiO2 | 66 bis 68 % |
| Al2O3 | 16,5 bis 18,5% |
| Fe2O3 | max. 0,17 % |
| TiO2 | max.0,6% |
| CaO | max. 0,05% |
| MgO | max. 0,05% |
| K2O | 11,0 bis 13,0% |
| Na2O | max. 0,7% |
| | |

Das Kaolin KDG enthält folgende Bestandteile (Massenanteil):

| | |
|---|---|
| SiO2 | 59 bis 62 % |
| Al2O3 | 35,5 bis 36,9% |
| Fe2O3 | max. 0,75 % |
| MgO | max. 0,5% |
| K2O | 0,9 bis 1,4% |
| Na2O | max. 0,5% |
| | |

Mitbestimmend kann auch das Herstellungsverfahren sein. Im Grunde kann eine erfindungsgemäße Fliese nach dem eingangs beschriebenen Verfahren hergestellt werden.

Es hat sich aber als besonders vorteilhaft erwiesen, wenn von der Rückseite der getrockneten Rohlinge vor dem Brennen eine Schicht abgetragen wird. In dieser Schicht, die auch Presshaut genannt wird, ist die gepresste Rohmasse stark verdichtet, so dass sie im Vergleich zum Inneren des Rohlings wenig Poren oder Kapillaren enthält. Wird diese Presshaut abgetragen, haben mehr Poren und Kapillaren Kontakt mit der Rückseite des Rohlings, was den Transport von Wasser von der Rückseite der gebrannten Fliese zu deren Rändern begünstigt. Das Abtragen der Presshaut kann vollflächig oder nur in Teilbereichen der Rückseite der Fliese erfolgen. Letzteres bietet sich insbesondere an, wenn die Rückseite der Fliese nicht eben ist, sondern geriffelt oder genutet. Es kann dann nur die Presshaut von den erhabenen Stegen zwischen den Nuten abgetragen sein. Das Abtragen kann durch Schleifen erfolgen. Durch das Abtragen können von der Rückseite des getrockneten Rohlings 0,5 bis 2,5 %, vorzugsweise 1 bis 2% der Dicke des Rohlings abgetragen werden.

Nach dem Trocknen und vor dem Brennen kann der Rohling dekoriert werden. Dazu kann der Rohling mit einer Glasur, insbesondere mit einer Deckglasur versehen werden. Mit der Glasur kann auf dem Rohling ein Muster aufgebracht werden.

Das Dekorieren erfolgt vorzugsweise nach dem Schleifen der Rückseite des Rohlings.

Nach dem Abtragen der Presshaut kann der Rohling 80 Minuten mit max. 1200°C gebrannt werden.

Auch die Ränder der Rohlinge oder der gebrannten Fliesen können durch Schleifen bearbeitet sein. Dadurch kann auch an den Rändern eine offenporigere Struktur erreicht werden als bei unbearbeiteten Rändern, wodurch der Transport von Wasser aus den Fliesen in die Fugen zwischen den Fliesen erleichtert wird.

Die Porenverteilung und das Porenvolumen einer erfindungsgemäßen Steinzeugfliese genügen den Vorgaben der Norm DIN 18515 in der derzeit gültigen Fassung.

Mitbestimmend für die Eigenschaften der Fliese könnte auch die Maschine sein, die zur Herstellung der Rohlinge benutzt wird. So kann eine Strangpressform bzw. das Mundstück der Strangpresse die kapillare Ausrichtung der keramischen Rohmasse begünstigen. Durch ein erfindungsgemäßes Mundstück, das auf die Fliesengeometrie angepasst ist, wird eine optimale Verdichtung und Homogenisierung des gepressten Massestrangs erzielt. Das Mundstück ist so gestaltet, dass es zu einem isokinetischen Durchlaufen der Massen bei der Herstellung des Strangs kommt, aus dem die Rohlinge geschnitten werden. Aber auch die Gestaltung einer Verdichtereinheit einer Strangpressmaschine und Führung der Masse in der Strangpressmaschine kann Einfluss auf die gewünschte Homogenität und den gewünschten Verdichtungsgrad haben, die vorteilhaft für die Erzeugung der Kapillaren und deren Ausrichtung in den Rohlingen bzw. den Fliesen ist.

Eine weitere mitbestimmende Ursache für die Ausbildung der Kapillare könnte eine besondere Gestaltung einer erfindungsgemäßen Fliese sein. So kann zum Beispiel der Rohling, vorzugsweise parallel zu der Rückseite des Rohlings Fasern, Garne, Zwirne oder Fäden enthalten. Diese Fasern, Garne, Zwirne oder Fäden in einem Rohling einer erfindungsgemäßen Fliese verbrennen während des Brennvorgangs vorzugsweise rückstandsfrei und können so Kapillaren in der Fliese erzeugen, die einen Flüssigkeitstransport von der Rückseite der Fliese zu den Rändern der Fliese erleichtern.

Die Fasern, Garne, Zwirne oder Fäden können aus Kunstfasern, zum Beispiel aus Nylon, Kohlefasern oder brennbaren Naturfasern hergestellt sein.

Alternativ zu Fasern, Garnen, Zwirnen oder Fäden können auch beim Herstellen der Rohlinge, insbesondere beim Strangpressen, linienartige Spuren von Pulvern in die Rohlinge eingebracht werden, die beim Brennen vorzugsweise rückstandfrei verbrennen und so Kapillaren in den Fliesen ausbilden. Diese Pulver können aus Kunststoffen, zum Beispiel Nylon, aus Kohle oder anderen brennbaren Naturstoffen hergestellt sein.

Es ist auch möglich, dass Pulver und Fasern, Garne, Zwirne oder Fäden kombiniert zum Einsatz kommen, um Kapillaren zu bilden.

Die Fliese, die als Fassadenplatte verwendet werden soll, weist eine mittlere Eindringtiefe von Wasser auf, die in einem 2h-Vakuumversuch Farbeindringversuch bei 200 mbar 200 bis 1500 µm, insbesondere 300 bis 1500 µm beträgt. Die mittlere Eindringtiefe kann vorteilhaft 500 bis 1300 µm betragen.

Im Vergleich dazu beträgt die Eindringtiefe bei einer Feinsteinzeugfliese zum Beispiel weniger als 100 µm und das auch nur punktuell.

Der relative Massenzuwachs kann in dem 2h-Vakuumversuch 1,5 % bis 2 %, insbesondere 1,7 % bis 1,95 % betragen.

Auch in einem Farbeindringversuch bei Normaldruck kann festgestellt werden, dass Wasser oder Feuchtigkeit in eine erfindungsgemäße Fliese besser eindringen kann als in eine herkömmliche Fliese. In einem 10h-Eintauchversuch bei Normaldruck konnte eine Eindringtiefe von 100 bis 500 µm festgestellt werden. Der relative Massezuwachs kann 0,4 % bis 0,5 % betragen.

Alternativ oder ergänzend lässt sich die Erfindung so beschreiben, dass Wasser oder Wasserdampf in der Fliese eine kapillarrichtungsbezogene Durchdringungsgeschwindigkeit haben, die deutlich größer ist als die Durchdringungsgeschwindigkeit in herkömmlichen Fliesen, die als Fassadenplatten verwendet werden. So kann gemäß der Erfindung die Fliese in einem an eine Rückseite angrenzenden Bereich in einem Eintauchversuch bei Normaldruck eine Durchdringungsgeschwindigkeit in einer Richtung senkrecht zur Rückseite der Fliese bei ca. 30 µm/h bis 50 µm/h und/oder in einer Richtung parallel zur Rückseite bei ca. 150 µm/h bis 200 µm/h aufweisen. Eintauchversuch bedeutet, dass die Durchdringungsgeschwindigkeit bei einer vollständig in Wasser eingetauchten Fliesen festgestellt wird.

Bei einer Fassadenplatte mit diesen Eigenschaften sind Kapillaren vorhanden, die eine im Vergleich zu herkömmlichen Fassadenplatten große Eindringtiefe von Wasser in die Fassadenplatte erlauben. Dagegen fehlt es bei herkömmlichen Fassadenplatten an solchen Kapillaren. Wasser kann also nicht in die Fassadenplatten eindringen.

Die Kapillaren ermöglichen aber nicht nur, dass Wasser in die Fassadenplatte eindringen kann. Ebenso ist es möglich, dass Wasser durch die Kapillaren aus der Fassadenplatte austreten kann.

Damit wird es möglich, dass Wasser, das sich in der Fassade hinter den erfindungsgemäßen Fassadenplatten sammelt durch die Rückseite der Fassadenplatten in die Kapillaren in den Fassadenplatten gelangt. Von dort kann das Wasser durch die Kapillaren in den Fassadenplatten zu den Rändern der Fassadenplatten transportiert werden. Dort kann das Wasser aus den Fassadenplatten austreten und in die Fugen zwischen den Fassadenplatten eintreten. Über die Fugen kann das Wasser dann aus der Fassade austreten. Es kommt somit nicht zu Wassersammlungen in der Fassade hinter den Fassadenplatten. Frostsprengungen können bei erfindungsgemäßen Fassadenplatten nicht auftreten.

Vorzugsweise sind somit in erfindungsgemäßen Fliesen Kapillare vorhanden, die sich parallel zu der Rückseite der Fliese erstrecken und eine Verbindung, z.B. über weitere Kapillare haben, die zur Rückseite der Fliese führt.

Die Möglichkeit, dass durch die erfindungsgemäßen Fassadenplatten Feuchtigkeit transportiert werden kann, die durch die Eindringtiefe im Farbeindringversuch quantifiziert werden kann, kommt durch Kapillare zustande, die bei der Herstellung der Fassadenplatten in den Fassadenplatten erzeugt werden.

Zugleich ist es von Vorteil, wenn die Fliese eine Wasseraufnahme von 1 % bis 2 %, vorzugsweise ungefähr 1,5 % aufweist. Trotz der Möglichkeit, dass Wasser vergleichsweise schnell und tief in eine erfindungsgemäße Fliese aufgenommen werden kann, hat die Fliese vorteilhaft nur eine vergleichsweise geringe Möglichkeit Wasser aufzunehmen, das heißt, sie kann nur eine geringe Menge Wasser halten. Es ergibt sich daher, das Wasser, dass auf der Rückseite der Fliese ansteht, durch die Fliese zu deren Rändern transportiert und von dort über die Fugen zwischen den Fliesen abgeführt werden kann.

Wie jede Steinzeugfliese enthalten auch erfindungsgemäße Fliesen Poren. Ein Vorteil einer erfindungsgemäßen Fliese ist es nun, dass die Poren einer erfindungsgemäßen Fliese untereinander durch Kanäle verbunden sind oder zu Kanälen geformt sind und die Kanäle im Wesentlichen parallel zu einer Unterseite der Fliese ausgerichtet sind. Diese Kanäle können Teile der Kapillaren sein, die den Wassertransport durch die Fliese ermöglichen.

Für die Kapillaren in den erfindungsgemäßen Fassadenplatten können verschiedene Faktoren ursächlich oder zumindest mitbestimmend sein.

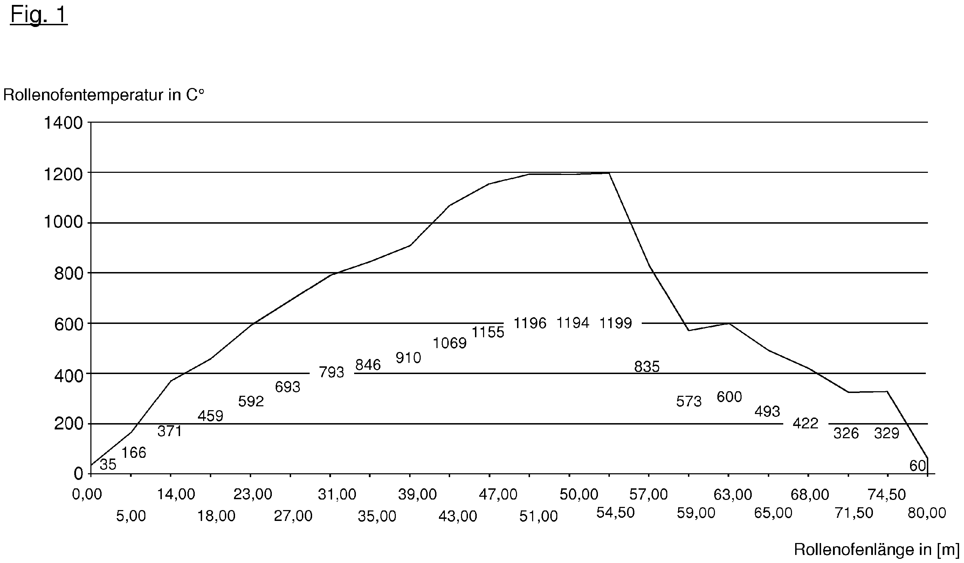

Ein Brennvorgang für eine erfindungsgemäße Fliese ist nachfolgend anhand einer Figur erläutert. Es zeigt die
- Fig. 1: eine Temperaturverteilung in einem Rollenofen, der für den Brennvorgang verwendet wird.

In der Figur ist die Temperaturverteilung im Ofen angegeben, mit der erfindungsgemäße Fliesen hergestellt werden können. Bei dem Ofen kann es sich vorteilhaft um einen Rollenofen handeln. Die Fliesen werden im Durchlauf in dem Ofen gebrannt.

Die Messstellen, für die in der Figur 1 die Temperaturen angegeben sind, sind nicht äquidistant über die Länge des Ofens bzw. des Wegs der Fliesen durch den Ofen verteilt. Die Länge des Ofens ist 80 m. Die Brenndauer, d.h. die Verweildauer der Rohling/Fliesen beträgt ca. 80 min. Die Rohlinge/Fliesen werden mit annähernd gleichmäßiger Geschwindigkeit durch den Ofen transportiert. Die Geschwindigkeit der Rohlinge/Fliesen kann in verschiedenen Bereichen des Ofens wie folgt eingestellt sein:

| | |
|---|---|
| Ofenmeter 37 bis 43 | Transportgeschwindigkeit 1100 mm/Minute |
| Ofenmeter 43 bis 49 | Transportgeschwindigkeit 1100 mm/Minute |
| Ofenmeter 49 bis 55 | Transportgeschwindigkeit 1100 mm/Minute |
| Ofenmeter 55 bis 63 | Transportgeschwindigkeit 1035 mm/Minute |
| Ofenmeter 63 bis 69 | Transportgeschwindigkeit 1075 mm/Minute |

| | |
|---|---|
| Ofenmeter 69 bis 77 | Transportgeschwindigkeit 1075 mm/Minute |
| Ofenmeter 77 bis 80 | Transportgeschwindigkeit 1070 mm/Minute |

Ofenmeter bezeichnet dabei die Entfernung des Rohlings/der Fliese zum Eingang des Ofens.

Im Ofen lassen sich eine Aufheizzone, eine erste Brennzone, eine Hochtemperaturzone (zweite Brennzone), eine erste Zone der Direktkühlung, eine erste Zone der Indirektkühlung, eine zweite Zone der Direktkühlung, eine zweite Zone der Indirektkühlung und der Endkühlung unterscheiden. In der Aufheizzone werden Temperaturen bis ca. 800°C erreicht. Ab 800°C beginnt ein Sintern des Rohlings der dadurch zur Fliese wird. Die Brennkurve gipfelt bei ca. 1200 C in der Hochtemperaturzone, an die sich die Zone der Sturzkühlung anschließt, in der die Fliesen direkt gekühlt werden (Ofenmeter 54,5 bis 63). Daran schließt sich eine Zone der Indirektkühlung (Ofenmeter 63 bis 71,5) und eine Zone der Endkühlung (Ofenmeter 71,5 bis 80) an. In der Zone der Sturzkühlung erfolgt eine Temperaturabsenkung zum Beispiel mit Hilfe von Ventilatoren.

## Patentansprüche

1. Rohstoffmischung zur Herstellung einer Steinzeugfliese , **dadurch gekennzeichnet, dass** die Rohstoffmischung folgende Rezeptur in Massenanteil aufweist:
| | |
|---|---|
| Tonmischung "T2761" | 50 % |
| Tonmischung "T1571" | 7,73 % |
| Feldspat "HP-1" | 9,54 % |
| Feldspat "Silbergrube" | 12,27 % |
| Feldspat "FS-700" | 12,73 % |
| Kaolin "KDG" | 7,73 % |

2. Rohmasse zur Herstellung einer Steinzeugfliese mit einer Rohstoffmischung nach Anspruch 1, **dadurch gekennzeichnet, dass** auf 1100 kg einer Rohstoffmischung nach Anspruch 1 gemäß der Rezeptur 188 l Wasser kommen.

3. Verfahren zum Herstellen einer Steinzeugfliese, **gekennzeichnet durch** folgende Schritte:
- Aufbereiten der Rohstoffmischung nach Anspruch 1 durch Mahlen auf eine Feinheit i.e Korngröße von < 100 µm, Trocknen auf eine Feuchte von < 1 % und Mauken zum Herstellen einer gleichmäßigen Feuchte,
- Trockenmischen der Rohstoffe,
- Nassmischen der Rohstoffe und des Wassers zu einer Rohmasse nach Anspruch 2,
- Strangpressen der Rohmasse
- Schneiden der zu einem Tonband gepressten Rohmasse zu Fliesenrohlingen,
- Trocknen der Fliesenrohlinge und
- Brennen der Fliesenrohlinge, wobei die Steinzeugfliese eine mittlere Eindringtiefe von Wasser aufweist, die in einem 2h-Vakuumversuch Farbeindringversuch bei 200 mbar 200 bis 1500 µm, insbesondere 300 bis 1500 µm beträgt und/oder dass in einem an eine Rückseite angrenzenden Bereich der Fliese in einem Eintauchversuch bei Normaldruck eine Durchdringungsgeschwindigkeit in einer Richtung senkrecht zur Rückseite der Fliese bei ca. 30 µm/h bis 50 µm/h und/oder in einer Richtung parallel zur Rückseite bei ca. 150 µm/h bis 200 µm/h liegt.

4. Verfahren nach Anspruch 3, **dadurch gekennzeichnet, dass** vor dem Brennen eine Unterseite der Fliese geschliffen wird

5. Verfahren nach Anspruch 3 oder 4, **dadurch gekennzeichnet, dass** die Rohlinge ggf. nach dem Schleifen der Unterseite und vor dem Brennen mit einer Suspension zum Herstellen einer Glasur versehen werden.

6. Verfahren nach Anspruch 3 bis 5, **dadurch gekennzeichnet, dass** nach dem Brennen Ränder der Fliese geschliffen werden.

7. Verfahren nach einem der Ansprüche 3 bis 6, **dadurch gekennzeichnet, dass** zwischen dem Pressen und dem Brennen eine Presshaut von einer Unterseite des Rohlings entfernt wird.

8. Verfahren nach einem der Ansprüche 3 bis 7, **dadurch gekennzeichnet, dass** beim Strangpressen Fasern, Garne, Zwirne oder Fäden in den Rohling eingearbeitet werden.

9. Verfahren nach Anspruch 8, **dadurch gekennzeichnet, dass** die Fasern, Garne, Zwirne oder Fäden in einer Richtung parallel zur Unterseite der Fliese ausgerichtet sind.

10. Verfahren nach Anspruch 8 oder 9, **dadurch gekennzeichnet, dass** die Fasern, Garne, Zwirne oder Fäden während des Brennens verbrennen.

11. Steinzeugfliese erhältlich durch das Verfahren nach einem der Ansprüche 3 bis 10, **dadurch gekennzeichnet, dass** die Fliese eine mittlere Eindringtiefe von Wasser aufweist, die in einem 2h-Vakuumversuch Farbeindringversuch bei 200 mbar 200 bis 1500 µm, insbesondere 300 bis 1500 µm beträgt und/oder dass in einem an eine Rückseite angrenzenden Bereich der Fliese in einem Eintauchversuch bei Normaldruck eine Durchdringungsgeschwindigkeit in einer Richtung senkrecht zur Rückseite der Fliese bei ca. 30 µm/h bis 50 µm/h und/oder in einer Richtung parallel zur Rückseite bei ca. 150 µm/h bis 200 µm/h liegt.

12. Steinzeugfliese nach Anspruch 11, **dadurch gekennzeichnet, dass** die mittlere Eindringtiefe von Wasser 500 bis 1300 µm beträgt.

13. Steinzeugfliese nach Anspruch 11 oder 12, **dadurch gekennzeichnet, dass** die Fliese eine Wasseraufnahme von 1 bis 2 %, vorzugsweise ungefähr 1,5 % aufweist.

14. Steinzeugfliese nach einem der Ansprüche 11 bis 13, **dadurch gekennzeichnet, dass** Poren der Fliese untereinander durch Kanäle verbunden sind oder zu Kanälen geformt sind und die Kanäle im Wesentlichen parallel zu einer Unterseite der Fliese ausgerichtet sind.

15. Steinzeugfliese nach einem der Ansprüche 11 bis 14, **dadurch gekennzeichnet, dass** die Unterseite der Fliese oder Teile der Unterseite der Fliese durch Schleifen bearbeitet ist.

16. Steinzeugfliese nach einem der Ansprüche 11 bis 15, **dadurch gekennzeichnet, dass** Ränder der Fliese durch Schleifen bearbeitet sind.

17. Steinzeugfliese nach einem der Ansprüche 11 bis 16, **dadurch gekennzeichnet, dass** die Unterseite und/oder die Ränder eine offenporige Struktur aufweisen.

## Claims

1. Raw material mixture for producing a stoneware tile, **characterized in that** the raw material mixture has the following formulation in mass percentages:
| | |
|---|---|
| Clay mixture "T2761" | 50% |
| Clay mixture "T1571" | 7.73% |
| Feldspar "HP-1" | 9.54% |
| Feldspar "Silbergrube" | 12.27% |
| Feldspar "FS-700" | 12.73% |
| Kaolin "KDG" | 7.73% |

2. Raw mass for producing a stoneware tile with a raw material mixture according to claim 1, **characterized in that** according to the formulation 188 l of water are added to 1100 kg of a raw material mixture according to claim 1.

3. Method for producing a stoneware tile, **characterized by** the following steps:
- preparing the raw material mixture according to claim 1 by grinding to a fineness, i.e. grain size of < 100 µm, drying to a moisture content of < 1% and mashing to produce a uniform moisture content,
- dry mixing the raw materials,
- wet mixing the raw materials and the water to form a raw mass according to claim 2,
- extruding the raw mass,
- cutting the raw mass that is pressed into a clay strip into tile blanks,
- drying the tile blanks and
- firing the tile blanks, wherein the stoneware tile has an average penetration depth of water, which in a 2h vacuum test dye penetration test at 200 mbar is 200 to 1500 µm, in particular 300 to 1500 µm, and/or in a region of the tile adjoining a rear side in an immersion test at normal pressure a penetration speed in a direction perpendicular to the rear side of the tile is approximately 30 µm/h to 50 µm/h and/or in a direction parallel to the rear side is approximately 150 µm/h to 200 µm/h.

4. Method according to claim 3, **characterized in that** an underside of the tile is ground before firing.

5. Method according to claim 3 or 4, **characterized in that** the blanks are provided with a suspension for producing a glaze, if necessary after grinding the underside and before firing.

6. Method according to claim 3 to 5, **characterized in that** edges of the tiles are ground after firing.

7. Method according to any one of claims 3 to 6, **characterized in that** a press skin is removed from an underside of the blank between pressing and firing.

8. Method according to any one of claims 3 to 7, **characterized in that** fibres, yarns, twists or threads are incorporated into the blank during extrusion.

9. Method according to claim 8, **characterized in that** the fibres, yarns, twists or threads are aligned in a direction parallel to the underside of the tile.

10. Method according to claim 8 or 9, **characterized in that** the fibres, yarns, twists or threads are burnt during the firing.

11. Stoneware tile that can be obtained by the method according to any one of claims 3 to 10, **characterized in that** the tile has an average penetration depth of water, which in a 2h vacuum test dye penetration test at 200 mbar is 200 to 1500 µm, in particular 300 to 1500 µm, and/or **in that** in a region of the tile adjoining a rear side in an immersion test at normal pressure a penetration speed in a direction perpendicular to the rear side of the tile is approximately 30 µm/h to 50 µm/h and/or in a direction parallel to the rear side is approximately 150 µm/h to 200 µm/h.

12. Stoneware tile according to claim 11, **characterized in that** the average penetration depth of water is 500 to 1300 µm.

13. Stoneware tile according to claim 11 or 12, **characterized in that** the tile has a water absorption of 1 to 2%, preferably approximately 1.5%.

14. Stoneware tile according to any one of claims 11 to 13, **characterized in that** pores of the tile are joined to one another by channels or are formed into channels and the channels are aligned to be substantially parallel to an underside of the tile.

15. Stoneware tile according to any one of claims 11 to 14, **characterized in that** the underside of the tile or parts of the underside of the tile are processed by grinding.

16. Stoneware tile according to any one of claims 11 to 15, **characterized in that** edges of the tile are processed by grinding.

17. Stoneware tile according to any one of claims 11 to 16, **characterized in that** the underside and/or the edges have an open-pored structure.

## Revendications

1. Mélange de matières premières pour la fabrication d'un carreau en grès cérame, **caractérisé en ce que** le mélange de matières premières présente la formule suivante en pourcentages en masse :
| | |
|---|---|
| mélange d'argile " T2761 " | 50 % |
| mélange d'argile " T1571 " | 7,73 % |
| feldspath " HP-1 " | 9,54 % |
| feldspath " Silbergrube " | 12,27 % |
| feldspath " FS-700 " | 12,73 % |
| kaolin " KDG " | 7,73 % |

2. Masse brute pour la fabrication d'un carreau en grès cérame avec un mélange de matières premières selon la revendication 1, **caractérisée en ce que**, selon la formulation, 188 l d'eau sont ajoutés à 1100 kg d'un mélange de matières premières selon la revendication 1.

3. Procédé de fabrication d'un carreau en grès cérame, **caractérisé par** les étapes suivantes :
- préparation du mélange de matières premières selon la revendication 1 par broyage à une finesse, c'est-à-dire une grosseur de grains < 100 µm, séchage à une humidité < 1 % et trempage pour l'établissement d'une humidité uniforme,
- mélange à sec des matières premières,
- mélange par voie humide des matières premières et de l'eau en une masse brute selon la revendication 2,
- extrusion de la masse brute
- découpe de la masse brute pressée en une bande d'argile en pièces brutes de carreau,
- séchage des pièces brutes de carreau et
- cuisson des pièces brutes de carreau, dans lequel le carreau en grès cérame présente une profondeur de pénétration d'eau moyenne qui s'élève dans un essai sous vide de pénétration de couleur de 2 h à 200 mbar est de 200 à 1500 µm, en particulier de 300 à 1500 µm et/ou en ce que dans une zone contiguë à un côté arrière du carreau dans un essai d'immersion à pression normale, une vitesse de pénétration dans une direction perpendiculaire au côté arrière du carreau est d'environ 30 µm/h à 50 µm/h et/ou dans une direction parallèle au côté arrière est d'environ 150 µm/h à 200 µm/h.

4. Procédé selon la revendication 3, **caractérisé en ce qu'**un côté inférieur du carreau est rectifié avant la cuisson.

5. Procédé selon la revendication 3 ou 4, **caractérisé en ce que** les pièces brutes sont pourvues éventuellement d'une suspension pour la fabrication d'un émaillage après la rectification du côté inférieur et avant la cuisson.

6. Procédé selon la revendication 3 à 5, **caractérisé en ce que** des bords du carreau sont rectifiés après la cuisson.

7. Procédé selon l'une quelconque des revendications 3 à 6, **caractérisé en ce qu'**une peau de pressage est retirée d'un côté inférieur de la pièce brute entre le pressage et la cuisson.

8. Procédé selon l'une quelconque des revendications 3 à 7, **caractérisé en ce que** des fibres, des fils, des fils retors ou des brins sont incorporés dans la pièce brute lors de l'extrusion.

9. Procédé selon la revendication 8, **caractérisé en ce que** les fibres, les fils, les fils retors ou les brins sont orientés dans une direction parallèle au côté inférieur du carreau.

10. Procédé selon la revendication 8 ou 9, **caractérisé en ce que** les fibres, les fils, les fils retors ou les brins brûlent pendant la cuisson.

11. - Carreau en grès cérame pouvant être obtenu par le procédé selon l'une quelconque des revendications 3 à 10, **caractérisé en ce que** le carreau présente une profondeur de pénétration d'eau moyenne qui s'élève dans un essai sous vide de pénétration de couleur de 2 h à 200 mbar est de 200 à 1500 µm, en particulier de 300 à 1500 µm et/ou **en ce que** dans une zone contiguë à un côté arrière du carreau dans un essai d'immersion à pression normale, une vitesse de pénétration dans une direction perpendiculaire au côté arrière du carreau est d'environ 30 µm/h à 50 µm/h et/ou dans une direction parallèle au côté arrière d'environ 150 µm/h à 200 µm/h.

12. Carreau en grès cérame selon la revendication 11, **caractérisé en ce que** le profondeur de pénétration d'eau moyenne est comprise entre 500 et 1300 µm.

13. Carreau en grès cérame selon la revendication 11 ou 12, **caractérisé en ce que** le carreau présente une absorption d'eau de 1 à 2 %, de préférence d'environ 1,5 %.

14. Carreau en grès cérame selon l'une quelconque des revendications 11 à 13, **caractérisé en ce que** des pores du carreau sont reliés entre eux par des canaux ou sont formés en canaux et les canaux sont orientés sensiblement parallèlement à un côté inférieur du carreau.

15. Carreau en grès cérame selon l'une quelconque des revendications 11 à 14, **caractérisé en ce que** le côté inférieur du carreau ou des parties du côté inférieur du carreau sont usinées par rectification.

16. Carreau en grès cérame selon l'une quelconque des revendications 11 à 15, **caractérisé en ce que** des bords du carreau sont usinés par rectification.

17. Carreau en grès cérame selon l'une quelconque des revendications 11 à 16, **caractérisé en ce que** le côté inférieur et/ou les bords présentent une structure à pores ouverts.
